(19) Europäisches Patentamt
European Patent Office
Office européen des brevets

(11) **EP 4 455 078 A1**

(12) **EUROPEAN PATENT APPLICATION**
published in accordance with Art. 153(4) EPC

(43) Date of publication:
**30.10.2024  Bulletin 2024/44**

(21) Application number: **22911125.7**

(22) Date of filing: **16.12.2022**

(51) International Patent Classification (IPC):
**C01B 21/068** (2006.01)

(52) Cooperative Patent Classification (CPC):
**C01B 21/068**

(86) International application number:
**PCT/JP2022/046411**

(87) International publication number:
**WO 2023/120422 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021  JP 2021207697**

(71) Applicant: **TOKUYAMA CORPORATION
Yamaguchi 745-8648 (JP)**

(72) Inventors:
• **KAWAI, Hideaki
  Shunan-shi, Yamaguchi 745-8648 (JP)**
• **ISHIMOTO, Ryuji
  Shunan-shi, Yamaguchi 745-8648 (JP)**

(74) Representative: **Kraus & Lederer PartGmbB
Thomas-Wimmer-Ring 15
80539 München (DE)**

(54) **SILICON NITRIDE POWDER**

(57)  The present invention is a silicon nitride powder having a β-conversion rate of 80% or more and having a lattice strain of $1.0 \times 10^{-3}$ or more. According to the present invention, there can be provided a silicon nitride powder having high sinterability even at a low temperature of about 1800°C.

**EP 4 455 078 A1**

**Description**

Technical Field

The present invention relates to a novel silicon nitride powder. Precisely, the present invention provides a β-type silicon nitride powder with improved sinterability.

Background Art

Among various ceramic sintered bodies, silicon nitride sintered bodies produced by adding various sintering aids to a silicon nitride powder followed by sintering at a high temperature have characteristics such as light weight, strong mechanical strength from room temperature to high temperatures, excellent chemical resistance, and excellent electrical insulation, and are used as antiwear members such as ball bearings, and high-temperature structural members. Further, silicon nitride sintered bodies have become used as thin and high-strength heat-radiation substrate materials, since the thermal conductivity thereof can be increased by devising the kind of the auxiliary agent and sintering conditions.
It is known that crystal forms of silicon nitride powder include α-type and β-type. Among them, the α-type silicon nitride powder is widely used at present because a dense sintered body having a high thermal conductivity can be obtained by re-precipitating the α-type silicon nitride powder as a β-type in the sintering process (see NPL 1).
On the other hand, a β-type silicon nitride powder formed by combustion synthesis is said to have worse sinterability as compared with the α-type silicon nitride powder, and as a technique for producing sintered bodies, for example, a method of obtaining a silicon nitride sintered body has been proposed in which a green sheet (body to be fired) containing a β-type silicon nitride powder having an average particle diameter of 0.5 μm and a sintering aid composed of ytterbium oxide and silicon magnesium nitride powder is sintered at 1900°C for 2 to 24 hours in pressurized nitrogen at 10 atmospheres to obtain a silicon nitride sintered body (see PTL 1).
As described above, the case of producing a sintered body using a β-type silicon nitride powder needed high temperature and high pressure.
Regarding the above problem, a technique of improving sinterability by controlling the particle size distribution of a silicon nitride powder is proposed (see PTL 2), but further improvement of sinterability is desired for industrial application.

Citation List

Patent Literature

PTL 1: JP2002-128569A
PTL 2: WO2021/107021

Non Patent Literature

NPL 1: Journal of the Marine Engineering Society in Japan, September 1993, Vol. 28, No. 9, pp. 548-556

Summary of Invention

Technical Problem

Accordingly, an object of the present invention is to provide a silicon nitride powder having high sinterability even at a low temperature.

Solution to Problem

The present inventors have repeatedly made assiduous studies for solving the above-mentioned problems and, as a result, have found that the above object can be attained by controlling the lattice strain of β-type silicon nitride to constitute a powder, and have completed the present invention.
Specifically, according to the present invention, there is provided a silicon nitride powder having a β-conversion rate of 80% or more and having a lattice strain of $1.0 \times 10^{-3}$ or more.

Advantageous Effects of Invention

The silicon nitride powder of the present invention exhibits good sinterability even at a low firing temperature of about 1800°C, and therefore can produce a dense, high-thermal-conductivity and high-strength sintered body even when almost no pressure is applied to prevent decomposition of silicon nitride.

Description of Embodiments

The silicon nitride powder of the present invention has a $\beta$-conversion rate of 80% or more, preferably 85% or more, more preferably 90% or more.

The $\beta$-conversion rate of the silicon nitride powder means the peak intensity rate of the $\beta$ phase relative to the total of the $\alpha$ phase and the $\beta$ phase in the silicon nitride powder, [100 $\times$ (peak intensity of $\beta$ phase)/(peak intensity of $\alpha$ phase + peak intensity of $\beta$ phase)], and is determined by powder X-ray diffraction (XRD) using CuK$\alpha$ line. More specifically, the $\alpha$-conversion rate and the $\beta$-conversion rate can be determined by calculating the weight ratio of the $\alpha$ phase and the $\beta$ phase of the silicon nitride powder by the method described in C. P. Gazzara and D. R. Messier: Ceram. Bull., 56 (1977), 777 - 780.

It is important that the silicon nitride powder of the present invention is controlled to have a lattice strain of $1.0 \times 10^{-3}$ or more. Specifically, studies by the present inventors have revealed that the lattice strain affects the sinterability of the silicon nitride powder, and that the effect of improving the sinterability is significantly exhibited by controlling the lattice strain to be a specific value or more.

The lattice strain of the silicon nitride powder is preferably $2.0 \times 10^{-3}$ or more, more preferably $3.0 \times 10^{-3}$ or more, further preferably $5.0 \times 10^{-3}$ or more, from the viewpoint of enhancing the sinterability improving effect. The upper limit of the lattice strain is not particularly limited, but the lattice strain of the silicon nitride powder is preferably $5.0 \times 10^{-2}$ or less, more preferably $3.0 \times 10^{-2}$ or less.

The lattice strain of the silicon nitride powder is a value calculated according to the following process by powder X-ray diffraction (XRD) using CuK$\alpha$ line.

Specifically, from the X-ray diffraction pattern drawn by scanning an X-ray detector in a range having 2$\theta$ of 15 to 80° at a step of 0.02°, the integral breadth of each of the (101), (110), (200), (201) and (210) planes of the $\beta$ phase is calculated, the integral breadth is substituted into the Williamson-Hall equation of the following equation 2, "2sin$\theta/\lambda$," in the following equation 2 is plotted as the X axis and "$\beta$cos$\theta/\lambda$" is plotted as the Y axis, and the lattice strain ($\eta$) is calculated from the slope of a straight line obtained by the least square method.

$$\beta\cos\theta/\lambda = \eta \times (2\sin\theta/\lambda) + (1/Dc) \quad (2)$$

($\beta$: integral breadth (rad), $\theta$: Bragg angle (rad), $\eta$: lattice strain, $\lambda$: X-ray wavelength, Dc: crystallite size (nm))

The silicon nitride powder of the present invention is not particularly limited in point of the other characteristics, and can have characteristics of any known silicon nitride powder for use for sintering.

For example, the average particle diameter D50 of the silicon nitride powder is preferably 0.5 to 3 $\mu$m, more preferably 0.7 to 1.7 $\mu$m. When the silicon nitride powder having such an average particle diameter is used, sintering is more likely to proceed. The average particle diameter D50 is a 50% value in the volume-based cumulative curve that shows a particle size distribution in measurement by a laser diffraction scattering method. D90, which is a 90% value in the volume-based cumulative curve that shows the particle size distribution of the silicon nitride powder is preferably 5 $\mu$m or less, more preferably 2 to 5 $\mu$m.

When the silicon nitride powder having such a particle size distribution is used, a dense, high-thermal-conductivity and high-strength silicon nitride sintered body can be more easily obtained together with the effect of controlling the lattice strain mentioned above.

Preferably, the specific surface area of the silicon nitride powder is 7 to 20 m$^2$/g. When the specific surface area of the silicon nitride powder is more than 20 m$^2$/g, the amount of dissolved oxygen tends to increase, but when the specific surface area is less than 7 m$^2$/g, the sinterability worsens so that a dense, silicon nitride sintered body that is high-thermal-conductivity and high-strength tends to be hard to obtain. The specific surface area of the silicon nitride powder is more preferably 12 to 15 m$^2$/g.

In the present invention, the specific surface area means a BET specific surface area measured using a BET one-point method by nitrogen gas adsorption.

Further, the total oxygen amount in the silicon nitride powder of the present invention is, though not particularly limited, preferably 1% by mass or more. The total oxygen amount is a total of the amount of the above-mentioned dissolved oxygen (internal oxygen) and the amount of external oxygen. When the total oxygen amount is equal to or more than the lower limit, for example, the effect that sintering is facilitated by the silicon oxide and others on the surfaces of the particles is exhibited. Preferably, the total oxygen amount in the silicon nitride powder is 10% by mass or less.

Also preferably, the amount of dissolved oxygen in the silicon nitride powder of the present invention is 0.2% by mass or less. When the amount of dissolved oxygen is more than 0.2% by mass, the silicon nitride sintered body obtained by firing under firing conditions, which is a characteristic of the present invention, tends to have a low thermal conductivity. From the viewpoint of obtaining the high-thermal-conductivity silicon nitride sintered body, the amount of dissolved oxygen in the silicon nitride powder is especially preferably 0.1% by mass or less.

Here, the amount of dissolved oxygen means oxygen dissolved inside the particles of the silicon nitride powder (hereinafter also referred to as internal oxygen), and does not contain oxygen derived from oxides such as $SiO_2$ inevitably existing on the surfaces of the particles (hereinafter also referred to as external oxygen).

As described below, the silicon nitride powder of the present invention can be obtained by pulverizing a silicon nitride powder for a relatively long period of time, in which, preferably the amount of metal impurities that are likely to be mixed by pulverization is kept as low as possible. Specifically, it is desirable that the content of iron and aluminum is 500 ppm or less, respectively, preferably 100 ppm or less, more preferably 50 ppm or less, and the total content of impurity metals including the above metals is 1000 ppm or less, preferably 300 ppm or less, more preferably 200 ppm or less.

<Production of Silicon Nitride Powder>

The method for producing the silicon nitride powder of the present invention is not particularly limited so far as the method can produce the silicon nitride powder having the above-mentioned characteristics. To the production method for the silicon nitride powder, for example, applicable is a reductive nitriding method in which silicon nitride is produced by flowing nitrogen gas in the presence of a carbon powder using a silica powder as a raw material, a direct nitriding method of reacting a silicon powder and nitrogen at a high temperature, or an imide decomposition method of reacting a silicon halide and ammonia, and from the viewpoint of easy production of the silicon nitride powder having the above-mentioned characteristics, a direct nitriding method is preferable, and above all, a direct nitriding method using a self-combustion method (combustion synthesis method) is more preferable.

The combustion synthesis method is a method in which a silicon powder is used as a raw material and a part of the raw material powder is forcedly ignited in a nitrogen atmosphere to synthesize silicon nitride by self-heating of the raw material compound. The combustion synthesis method is a known method, for which, for example, JP2000-264608A and WO2019/167879 can be referred to.

The raw material powder for use in the combustion synthesis method contains at least a silicon powder, and preferably contains a silicon powder and a diluent. The silicon nitride powder of the present invention can be easily obtained by preparing the raw material powder as described below.

The average particle diameter of the silicon powder contained in the raw material powder is preferably 1 to 20 $\mu$m, more preferably 2 to 10 $\mu$m.

As the diluent, preferably used is a silicon nitride powder. The average particle diameter of the silicon nitride powder for use as the diluent is preferably 0.1 to 10 $\mu$m, more preferably 0.5 to 5 $\mu$m.

The average particle diameter of the silicon powder and the silicon nitride powder is a 50% value in the volume-based cumulative curve that shows a particle size distribution in measurement by a laser diffraction scattering method.

The content of the silicon powder in the raw material powder is preferably 50 to 95% by mass, more preferably 70 to 90% by mass. The content of the diluent in the raw material powder is preferably 5 to 50% by mass, more preferably 10 to 30% by mass. When the content of the diluent is equal to or more than the lower limit, heat generation of the raw material powder is reduced, and temperature control is easy. When the content of the diluent is equal to or less than the upper limit, silicon nitriding combustion heat can be easily propagated to the whole raw material powder filled in the reaction vessel.

The raw material powder can contain any other component than the silicon powder and the diluent used if necessary. Examples of the other component include chlorides such as sodium chloride and ammonium chloride, and oxides such as calcium oxide, yttrium oxide and magnesium oxide. The amount of the other component is preferably 10% by mass or less based on the total amount of the raw material powder, more preferably 5% by mass or less, further preferably 1% by mass or less, further preferably 0% by mass.

By using a raw material having a high purity in the production method for the silicon nitride powder, the amount of dissolved oxygen can be suppressed low to fall within the above-mentioned range. For example, when the silicon nitride powder is produced by the direct nitriding method, it is preferable to use a silicon powder that does not have a factor that cause solid solution of oxygen inside as a raw material to be used, and more specifically, it is preferable to use a silicon powder derived from a semiconductor-grade silicon, for example, a silicon powder representative of a cutting powder generated when the silicon is processed by cutting or the like. The semiconductor-grade silicon is typically a polycrystalline silicon obtained by a so-called "Siemens method" in which high-purity trichlorosilane and hydrogen are reacted in a bell jar reactor vessel.

In the combustion synthesis method, the raw material powder is filled in a reactor vessel (setter). The reactor vessel is preferably a heat-resistant reactor vessel such as a ceramic-made or graphite-made one. From the viewpoint of easily obtaining the silicon nitride powder of the present invention, it is preferable that the bulk density of the raw material powder layer in the reactor vessel is set preferably in a range of 0.1 to 1.0 g/cm$^3$, more preferably in a range of 0.3 to 0.7 g/cm$^3$.

In the production method for the silicon nitride powder of the present invention, the method of controlling the lattice strain is not particularly limited, and by employing the combustion synthesis method, a β-type silicon nitride powder with some large lattice strain can be obtained, but by further carrying out specific pulverization for a relatively long period of time, the lattice strain can be enlarged to fall within the above-mentioned range. Examples of the pulverizing method include a pulverizing method using a pulverizer such as a vibrating ball mill, which is likely to cause shearing, until the lattice strain reaches the range.

For example, specific conditions for pulverization with a vibrating ball mill are mentioned: balls each having a diameter of 10 to 20 mm are filled in the mill at an apparent filling rate of 70 to 95%, preferably 75 to 90%, and a silicon nitride powder is filled therein in a ratio of 50 to 100% of the space after filled with the balls, preferably 60 to 80%, and pulverized in a range of oscillation of 4 to 16 mm, preferably 5 to 13 mm, at an oscillation frequency of 600 to 2000/min, preferably 1000 to 1500/min, with a gravitational acceleration magnification of 4 to 10G, preferably 4 to 7G. Under the above conditions, it is preferable that the pulverization is carried out for 5 to 20 hours, preferably 10 to 15 hours. Further preferably, the temperature during the pulverization is controlled to be 50 to 120°C.

It is also preferable to use a ball made of a material having a hardness substantially equal to that of β-type silicon nitride, specifically, a ball made of the silicon nitride sintered body as the ball, so that the lattice strain can be controlled while appropriately suppressing generation of fine powder when pulverization is performed for a long time. Further, use of a co-material makes it possible to effectively prevent the silicon nitride powder obtained by pulverization from contamination caused by balls.

In pulverization, a pulverization aid such as ethanol can be used as needed. Fine powder formed by pulverization can be partly removed, as needed, for controlling the particle size distribution to be as above.

[Method for Producing Silicon Nitride Sintered Body]

The present invention also provides a method for producing a silicon nitride sintered body, including firing a shaped body of the silicon nitride powder in a nitrogen atmosphere. The shape of the sintered body is not particularly limited, but a substrate is typical, and one example of a typical production method for the silicon nitride sintered substrate includes heating a green sheet containing the silicon nitride powder of the present invention and a sintering aid, in which the total content of an aluminum element is controlled to be 800 ppm or less, in an inert gas atmosphere under a pressure of 0.1 MPa·G or more and less than 0.5 MPa·G and at a temperature of 1200 to 1800°C to sinter the silicon nitride.

In the above method using the silicon nitride powder of the present invention having a specific lattice strain though having a high β-conversion rate, dense sintering in low-temperature and low-constant-pressure is enabled, and a high-thermal-conductivity and high-strength silicon nitride sintered substrate can be obtained.

In the production method for a silicon nitride sintered substrate mentioned above, any known sintering aid can be used with no specific limitation, but in particular, a sintering aid that contains a compound having no oxygen is preferably used. By using such a sintering aid, the thermal conductivity of the resultant silicon nitride sintered body can be prevented from lowering.

As the compound having no oxygen, a carbonitride compound containing a rare earth element or a magnesium element (hereinafter also referred to as a specific carbonitride compound) is preferable. By using such a specific carbonitride compound, a silicon nitride sintered body having a high thermal conductivity is more effectively and easily obtained. Although the reason is not clear, it is presumed that the specific carbonitride compound functions as a getter agent for adsorbing oxygen contained in the silicon nitride powder, and as a result, a silicon nitride sintered body having a high thermal conductivity can be obtained.

In the carbonitride compound containing a rare earth element, Y (yttrium), La (lanthanum), Sm (samarium), Ce (cerium) and the like are preferable as the rare earth element. Examples of the carbonitride compound containing a rare earth element include $Y_2Si_4N_6C$, $Yb_2Si_4N_6C$, and $Ce_2Si_4N_6C$, and among these, $Y_2Si_4N_6C$ and $Yb_2Si_4N_6C$ are preferable from the viewpoint of easily obtaining a silicon nitride sintered body having a high thermal conductivity. Examples of the carbonitride compound containing a magnesium element include $MgSiN_2$, and $MgSi_4N_6C$. These specific carbonitride compounds can be used alone or in combination of two or more types.

The sintering aid can further contain a metal oxide, in addition to the compound having no oxygen mentioned above. When the sintering aid contains a metal oxide, the silicon nitride powder is more likely to be sintered, and a sintered body that is denser and has a higher strength is easily obtained.

Examples of the metal oxide include yttrium oxide ($Y_2O_3$), magnesia (MgO), and ceria (CeO). Among these, yttrium oxide is preferable. The metal oxide can be used alone or in combination of two or more types.

The mass ratio of the compound having no oxygen such as typically the above-mentioned specific carbonitride compound to the metal oxide (compound having no oxygen/metal oxide) contained in the sintering aid is preferably 0.2 to 4, more preferably 0.6 to 2. When the mass ratio is in such a range, a silicon nitride sintered body that is denser and has a higher thermal conductivity can be easily obtained.

The content of the sintering aid in the green sheet is preferably 3 to 20 parts by mass, relative to 100 parts by mass of the silicon nitride powder, more preferably 7 to 10 parts by mass.

The green sheet can be shaped using a binder. In this case, the green sheet is shaped into a sheet form from the shaping composition to be mentioned below, then optionally dried and degreased under known conditions to remove the binder, and fired.

Not particularly limited, the binder includes polyvinyl alcohol, polyvinyl butyral, methyl cellulose, alginic acid, polyethylene glycol, carboxymethyl cellulose, ethyl cellulose, and acrylic resin.

The content of the binder for use in producing the green sheet is preferably 1 to 30 parts by mass, relative to 100 parts by mass of the silicon nitride powder, and the proportion can be appropriately determined depending on the shaping method.

The total content (mass) of an aluminum element in the green sheet is preferably 800 ppm or less. Specifically, the green sheet for use in the present invention contains an extremely small amount of an aluminum element, and accordingly, the aluminum element content in the resultant silicon nitride sintered body can be suppressed low to fall within the range, and the sintered body can exhibit a high thermal conductivity. The total content of the aluminum element in the green sheet is preferably 700 ppm or less, more preferably 600 ppm or less.

The production method for the green sheet for use in the present invention is not particularly limited, and one example thereof includes a method of shaping a shaping composition containing at least a silicon nitride powder and a sintering aid according to a known shaping method. Examples of the known shaping method include a press forming method, an extrusion molding method, an injection molding method, and a doctor blade method, and a doctor blade method is especially preferable.

The shaping composition can contain a solvent, from the viewpoint of ease of handling and ease of shaping. Not specifically defined, the solvent includes organic solvents such as alcohols and hydrocarbons, and water, but in the present invention, water is preferably used. Specifically, it is preferable to shape a shaping composition containing the silicon nitride powder, a sintering aid and water to give a green sheet. The use of water as a solvent is preferable because environmental load is reduced as compared with the case of using an organic solvent.

In the method for producing the silicon nitride sintered body, the green sheet is degreased as necessary, and then fired under a certain condition to sinter the silicon nitride. In the firing, in general, the green sheet is previously coated with a release material made of a boron nitride powder.

The firing is carried out in an inert gas atmosphere. For example, the inert gas atmosphere means a nitrogen atmosphere or an argon atmosphere. Also preferably, the firing is carried out in the inert gas atmosphere under a pressure of 0 MPa·G or more and less than 0.1 MPa·G. The pressure is preferably 0 MPa·G or more and 0.05 MPa·G or less. Here, the last letter G of the pressure unit MPa G means a gauge pressure.

Under the firing condition, a high pressure is not necessary, and therefore the firing can be carried out in a batch furnace such as a muffle furnace or a tubular furnace, or in a continuous furnace such as a pusher furnace.

The green sheet is fired by heating at a temperature of 1500 to 1800°C. When the temperature is lower than 1500°C, sintering of silicon nitride becomes difficult to proceed, and when higher than 1800°C, silicon nitride tends to be decomposed. From the viewpoint, the heating temperature in firing is preferably 1600 to 1800°C. The firing time is not particularly limited, but is preferably about 3 to 20 hours.

When a binder is used in forming the green sheet, the organic component such as the binder is preferably removed by providing a degreasing step. The degreasing condition is not particularly limited, and for degreasing, for example, the green sheet can be heated in air or in an inert atmosphere such as nitrogen or argon, at 450 to 650°C.

After fired, the silicon nitride sintered substrate is, as needed, blasted to remove the adhering substances such as the release material made of a boron nitride powder to adhere, thereby giving products.

Examples

Hereinafter, Examples are shown to more specifically describe the present invention, but the present invention is not limited to these Examples. In Examples, various physical properties were measured according to the following methods.

(1) β-Conversion Rate of Silicon Nitride Powder

The β-conversion rate of a silicon nitride powder was determined by powder X-ray diffraction (XRD) using CuKα line. Specifically, the β-conversion rate was determined by calculating the weight ratio of the α phase and the β phase of a silicon nitride powder by the method described in C. P. Gazzara and D. R. Messier: Ceram. Bull., 56 (1977), 777 - 780.

(2) Lattice Strain of Silicon Nitride Powder

The lattice strain was determined by powder X-ray diffraction (XRD) using CuKα line, according to the following process. Specifically, from the X-ray diffraction pattern of a sample powder drawn by scanning an X-ray detector in a range having 2θ of 15 to 80° at a step of 0.02°, the integral breadth of each of the (101), (110), (200), (201) and (210) planes of the β phase is calculated, and the integral breadth was substituted into the Williamson-Hall equation of the following equation 2. "2sinθ/λ" in the following equation 2 was plotted as the X axis and "βcosθ/λ" was plotted as the Y axis, and the lattice strain (η) was calculated from the slope of a straight line determined by the least square method.

$$\beta\cos\theta/\lambda = \eta \times (2\sin\theta/\lambda) + (1/Dc) \quad (2)$$

(β: integral breadth (rad), θ: Bragg angle (rad), η: lattice strain, λ: X-ray wavelength, Dc: crystallite size (nm))

(3) Particle Diameter of Silicon Nitride Powder

(i) Pretreatment for Sample

As pretreatment for the silicon nitride powder of a sample, the silicon nitride powder was fired in air at a temperature of about 500°C for 2 hours. Regarding the above firing treatment for the particle diameter measurement, there may be a case where the surface oxygen amount of the silicon nitride powder is small, or a case where the surfaces of the particles are coated with a hydrophobic substance owing to the pulverization aid during pulverization, and the particles themselves are therefore hydrophobic, and in such a case, the powder may disperse insufficiently in water, and reproducible particle diameter measurement may be difficult. Consequently, a silicon nitride powder of the sample is fired in air at a temperature of about 200°C to 500°C for a few hours to make the silicon nitride powder hydrophilic, whereby the powder becomes easily dispersible in a water solvent to enable reproducible particle diameter measurement. At that time, it has been confirmed that firing in air has little effect on the particle diameter measured.

(ii) Measurement of Particle Diameter

45 mL of water and 5 mL of sodium pyrophosphate having a concentration of 5% by mass were put into a beaker (inner diameter 60 mmcp, height 70 mm) having a marked line of at most 100 mL, then well stirred, and thereafter about one earpick of the silicon nitride powder of a sample was put thereinto and shaken with an ultrasonic homogenizer (US-300E manufactured by NISSEI Corporation, chip diameter: 26 mm) at an amplitude 50% (about 2 amperes) for 2 minutes to disperse the silicon nitride powder. For dispersion, the tip was so inserted that the point thereof could reach the position of a 20-mL mark of the beaker. Next, the particle size distribution of the resultant silicon nitride powder dispersion was measured using a laser diffraction/scattering particle size distribution analyzer (Microtrac MT3300EXII manufactured by Microtrac Bell Co., Ltd.). As the measurement conditions, water (refractive index 1.33) was selected as the solvent, a refractive index 2.01 was for the particle characteristic, the particle permeability was transmissive, and the particle shape was selected to be non-spherical. The particle diameter for which the cumulative curve of the volume-based particle size distribution determined by the particle size distribution measurement was 50% was referred to as D50, and the particle diameter for which the cumulative curve was 90% was as D90.

(4) Specific Surface Area of Silicon Nitride Powder

The specific surface area of a silicon nitride powder was measured according to a BET one-point method by nitrogen gas adsorption, using a BET method specific surface area analyzer (Macsorb HM model-1201) manufactured by MOUNTECH, Co., Ltd.
Before the specific surface area measurement, the silicon nitride powder to be analyzed was previously heat-treated in air at 600°C for 30 minutes to remove the organic substance adsorbing on the powder surface.

(5) Total Oxygen Amount and Amount of Dissolved Oxygen in Silicon Nitride Powder

The amount of dissolved oxygen in a silicon nitride powder was measured according to an inert gas fusion-infrared absorption method. For the measurement, used was an oxygen/nitrogen analyzer ("EMGA-920" manufactured by HORIBA, Ltd.).

25 mg of the silicon nitride powder used as a sample in each of Examples and Comparative Examples was encapsulated in a tin capsule (as the tin capsule, Tin Cupsule manufactured by LECO Corporation was used), and introduced into a graphite crucible, heated at 5.5 kW for 20 seconds to remove the adsorbed gas, and thereafter temperature was raised at 0.8 kW over 10 seconds and then at from 0.8 kW to 4 kW over 350 seconds, and the amount of carbon dioxide generated during the time was measured and converted into an oxygen content. Oxygen generated in the initial stage during heating for 350 seconds corresponds to oxygen derived from the oxides existing on the surfaces of the silicon nitride particles (external oxygen), and oxygen generated later corresponds to the dissolved oxygen in the silicon nitride crystals (internal oxygen), and accordingly, a perpendicular line was drawn from the portion corresponding to the valley of these two measured peaks calculated by subtracting the background measured in advance, and the two peaks were thus separated. The amount of dissolved oxygen (internal oxygen) and the amount of external oxygen were calculated by proportionally distributing the respective peak areas.

(6) Amount of Impurity Metals in Silicon Nitride Powder, and Shaped Body

The amount of iron, aluminum element and other impurity metals in a silicon nitride powder and in a shaped body was measured, using an inductively coupled plasma emission spectroscopic analyzer ("iCAP 6500 DUO" manufactured by Thermo Fisher Scientihook Co., Ltd.).

(7) Integrated Volume of Pores in Silicon Nitride Sintered Substrate

As samples, 20 sheets each having a size of $2 \times 2 \times (0.04)$ cm were arbitrarily cut out from a silicon nitride sintered substrate, and for each sample, in order to eliminate the influence of press-fitting from the side surface, the side surface of the sample was sealed by dipping in a high viscosity resin (epoxy resin) which did not penetrate into the pores so that the peripheral edge of the plane of the sample could be immersed by 0.1 mm. Of the samples thus prepared, pore size distribution curves were drawn, using a mercury porosimeter (Autopore IV9520, manufactured by Micromeritics Corporation), on which the integrated volume in a predetermined range was read and shown as an average value of the samples.

(8) Density of Shaped Body

Using an automatic densitometer (DMA-220H Model, manufactured by Shinko Denshi Co., Ltd.), the density of each shaped body was measured, and an average value of 15 pieces was referred to as a density of the shaped body.

(9) Thermal Conductivity of Silicon Nitride Sintered Substrate

The thermal conductivity of the silicon nitride sintered body of a sample was measured according to a flash method using LFA467 manufactured by NETZCH. The thermal conductivity can be determined by multiplication of the thermal diffusivity, the sintered body density and the sintered body specific heat. For the specific heat of the silicon nitride sintered body, the value of 0.68 (J/g·K) was used. The sintered body density was measured using an automatic densitometer (DMA-220H Model, manufactured by Shinko Denshi Co., Ltd.).
The thermal conductivity was measured after blasting the surface of the silicon nitride sintered body, followed by Au coating and carbon coating on the surface.

(10) Three-Point Bending Strength

The three-point bending strength of the silicon nitride sintered body was measured according to ISO DIS 23242:2019.

<Example 1> (Silicon Nitride Powder A)

A silicon powder (semiconductor-grade, average particle size 5 $\mu$m) and a silicon nitride powder of a diluent (average particle size 1.5 $\mu$m) were mixed to give a raw material powder (Si: 80 mass%, $Si_3N_4$: 20 mass%). The raw material powder was filled in a reaction vessel to form a raw material powder layer. Next, the reaction vessel was placed in a pressure-resistant sealed-type reactor having an ignition device and a gas supply/exhaust mechanism, and after degassing by reducing the pressure in the reactor, nitrogen gas was supplied for nitrogen purging. Subsequently, nitrogen gas was gradually supplied up to 0.7 MPa. The bulk density of the raw material powder at the time when the predetermined pressure was reached (during ignition) was 0.5 g/cm$^3$.
Subsequently, the end part of the raw material powder in the reaction vessel was ignited for combustion synthesis to give a massive product of silicon nitride. The resultant massive product was disintegrated by rubbing together, and then a moderate amount thereof was put into a vibrating ball mill and pulverized for 12 hours. Regarding pulverization in the vibrating ball mill, balls of a silicon nitride sintered body having a diameter of 15 mm were filled up to an apparent filling rate of 85% so that the silicon nitride crude powder could be in a ratio of 70% of the space, the range of oscillation was 8 mm, the oscillation frequency was 1200/min, the gravitational acceleration magnification was 5.6 G, and the temperature was controlled to be about 100°C.

The gravitational acceleration magnification is a value calculated by the correlation between the oscillation frequency and the centrifugal effect of the amplitude. In the pulverizer, the inside of the reactor was urethane-lined as a measure for prevention of heavy metal contamination. Just before the start of fine pulverization, 1% by mass of ethanol was added as a pulverization aid.

Measurement results of the silicon nitride powder A thus obtained are shown in Table 1.

Further, using the resultant silicon nitride powder A, a silicon nitride sintered substrate was produced according to the following method.

100 parts by mass of the silicon nitride powder A, and as sintering aids, 2 parts by mass of $Y_2Si_4N_6C$ and 4 parts by mass of $MgSi_4N_6C$, both produced according to the methods mentioned below, and 3 parts by mass of yttrium oxide were weighed, and mixed in a ball mill using a resin pot and silicon nitride balls and using water as a dispersion medium, for 24 hours. Water was previously weighed so that the concentration of the slurry could be 60 wt%, and put into the resin pot. After mixing by pulverization, 22 parts by mass of a polyvinyl alcohol resin was added, and further mixed for 12 hours to give a slurry-like shaping composition. Next, using a vacuum deaerator, the viscosity of the shaping composition was controlled to give a coating slurry. Subsequently, the shaping composition having the thus-controlled viscosity was sheet-shaped according to a doctor blade method to give a sheet shaped body having a width of 75 cm and a thickness of 0.35 mmt.

The sheet-shaped body thus obtained as described above was degreased at a temperature of 550°C in dry air to give a degreased shaped body. Subsequently, the degreased shaped body was put in a firing container, and fired at 1780°C for 9 hours in a nitrogen atmosphere under a pressure of 0.02 MPa·G to give a silicon nitride sintered body. Physical properties of the resultant silicon nitride sintered substrate are shown in Table 2.

<Production Method for Sintering Aid>

$Y_2Si_4N_6C$ powder: produced by heating yttrium oxide (manufactured by Shin-Etsu Chemical Co., Ltd.), the silicon nitride powder obtained by the above-mentioned method, and a carbon powder (manufactured by Mitsubishi Chemical Corporation) for synthesis using the following reaction formula.

$$8Si_3N_4+6Y_2O_3+15C+2N_2{\rightarrow}6Y_2Si_4N_6C+9CO_2$$

$MgSiN_2$ powder: produced by heating a magnesium powder (Yamaishi Metal Co., Ltd.), the silicon nitride powder obtained by the above-mentioned method, and a metallic silicon powder (in-house product) for synthesis using the following reaction formula.

$$Si_3N_4+Si+4Mg+2N_2{\rightarrow}4MgSiN_2$$

Yttrium oxide ($Y_2O_3$) powder: manufactured by Shin-Etsu Chemical Co., Ltd.

<Example 2> (Silicon Nitride Powder B)

For the purpose of confirming the difference in sinterability due to the difference in lattice strain, and in order to match the particle size distribution to that of the silicon nitride powder C obtained in Comparative Example 1 described later as much as possible, a silicon nitride powder in which a part of fine powder was removed was produced for the powder after pulverization by a vibrating ball mill in the production method for the silicon nitride powder A.

Measurement results of the silicon nitride powder B thus obtained are shown in Table 1.

Further, using the resultant silicon nitride powder B, a silicon nitride sintered substrate was produced according to the same method as in Example 1. Physical properties of the resultant silicon nitride sintered substrate are shown in Table 2.

The abundance of Th (tritium) and U (uranium) in the silicon nitride powder and the silicon nitride sintered body obtained in the above was measured according to the above-mentioned method, and was the lower limit of quantification (0.5 ppbw) or less.

<Comparative Example 1> (Silicon Nitride Powder C)

A silicon nitride powder was produced in the same process as that for the production method for the silicon nitride powder A, except that the pulverization time was 4 hours.

Measurement results of the silicon nitride powder C thus obtained are shown in Table 1.

Further, using the resultant silicon nitride powder C, a silicon nitride sintered substrate was produced according to the same method as in Example 1. Physical properties of the resultant silicon nitride sintered substrate are shown in Table 2.

Table 1

|  | Silicon Nitride Powder A | Silicon Nitride Powder B | Silicon Nitride Powder C |
|---|---|---|---|
| β-Conversion Rate (%) | 99.2 | 99.2 | 99.2 |
| Lattice Strain | $5.7 \times 10^{-3}$ | $2.8 \times 10^{-3}$ | $1.6 \times 10^{-4}$ |
| Specific Surface Area ($m^2$/g) | 13.2 | 8.9 | 8.2 |
| D50 (μm) | 1.1 | 1.3 | 1.4 |
| D90 (μm) | 2.4 | 2.5 | 2.6 |
| Total Oxygen Amount (mass%) | 1.55 | 1.52 | 1.50 |
| Amount of Dissolved Oxygen (mass%) | 0.1 | 0.1 | 0.1 |
| Iron Content (ppm) | 14 | 12 | 11 |
| Aluminum Content (ppm) | 23 | 23 | 23 |
| Total Content of Impurity Metals (ppm) | 57 | 57 | 56 |

Table 2

| | | | Example 1 | Example 2 | Comparative Example 1 |
|---|---|---|---|---|---|
| Green Sheet | Silicon Nitride Powder (parts by mass) | A | 100 | - | - |
| | | B | - | 100 | - |
| | | C | - | - | 100 |
| | Sintering Aid (parts by mass) | MgSiN$_2$ | 4 | 4 | 4 |
| | | Y$_2$Si$_4$N$_6$C | 2 | 2 | 2 |
| | | Y$_2$O$_3$ | 3 | 3 | 3 |
| Firing Condition | Pressure (MPa·G) | | 0.02 | 0.02 | 0.02 |
| | Temperature (°C) | | 1780 | 1780 | 1780 |
| Sintered Substrate | Physical Properties | Relative Density (%) | >99% | >99% | 98% |
| | | Integrated Volume of 1 to 10-μm Pores (ml/cm$^2$) | $2.0 \times 10^{-5}$ | $2.2 \times 10^{-5}$ | $4.0 \times 10^{-5}$ |
| | | Integrated Volume of 1 to 100-μm Pores (ml/cm$^2$) | $4.0 \times 10^{-4}$ | $4.1 \times 10^{-4}$ | $6.0 \times 10^{-4}$ |
| | | Aluminum Element Content (ppm) | 200 | 190 | 200 |
| | | Thermal Conductivity (W/mK) | 90 | 90 | 85 |
| | | 3-Point Bending Strength (MPa) | 720 | 715 | 680 |

**Claims**

1. A silicon nitride powder having a β-conversion rate of 80% or more and having a lattice strain of $1.0 \times 10^{-3}$ or more.

2. The silicon nitride powder according to claim 1, wherein a 50% value (D50) on a volume-based cumulative curve showing a particle size distribution thereof in measurement by a laser diffraction scattering method is 0.5 to 3 $\mu$m, and a 90% value (D90) on the cumulative curve is 5 $\mu$m or less.

3. The silicon nitride powder according to claim 1 or 2, wherein a specific surface area thereof measured by a BET one-point method is 7 to 20 m$^2$/g.

4. The silicon nitride powder according to any one of claims 1 to 3, wherein a total oxygen amount thereof is 1 to 10% by mass.

5. The silicon nitride powder according to any one of claims 1 to 4, wherein a content of iron and aluminum thereof is 500 ppm or less, respectively, and a total content of impurity metals including the metals thereof is 1000 ppm or less.

6. A method for producing a silicon nitride sintered body, comprising firing a shaped body of the silicon nitride powder according to any one of claims 1 to 5 in a nitrogen atmosphere.

## INTERNATIONAL SEARCH REPORT

| International application No. |
|---|
| **PCT/JP2022/046411** |

### A. CLASSIFICATION OF SUBJECT MATTER

*C01B 21/068*(2006.01)i
FI: C01B21/068 D

According to International Patent Classification (IPC) or to both national classification and IPC

### B. FIELDS SEARCHED

Minimum documentation searched (classification system followed by classification symbols)

C01B21/068; C04B35/584

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-23406 A (UBE INDUSTRIES, LTD.) 13 February 2020 (2020-02-13) claims | 1-6 |
| A | JP 6-48838 A (DENKI KAGAKU KOGYO KK) 22 February 1994 (1994-02-22) claims | 1-6 |
| A | JP 2021-113138 A (TOKUYAMA CORP.) 05 August 2021 (2021-08-05) examples 1, 2 | 1-6 |
| P, X | WO 2022/004755 A1 (TOKUYAMA CORP.) 06 January 2022 (2022-01-06) paragraphs [0106]-[0143], example 1, tables 1, 2 | 1-6 |
| P, X | WO 2022/034810 A1 (FJ COMPOSITE KK) 17 February 2022 (2022-02-17) paragraphs [0039]-[0044], [0082]-[0085], example 1, tables 1, 2 | 1-6 |

☐ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/046411**

| Patent document cited in search report | | | Publication date (day/month/year) | Patent family member(s) | | | Publication date (day/month/year) |
|---|---|---|---|---|---|---|---|
| JP | 2020-23406 | A | 13 February 2020 | WO claims | 2018/110565 | A1 | |
| | | | | TW | 201829299 | A | |
| JP | 6-48838 | A | 22 February 1994 | (Family: none) | | | |
| JP | 2021-113138 | A | 05 August 2021 | (Family: none) | | | |
| WO | 2022/004755 | A1 | 06 January 2022 | TW | 202208308 | A | |
| WO | 2022/034810 | A1 | 17 February 2022 | TW | 202216339 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002128569 A
- WO 2021107021 A
- JP 2000264608 A
- WO 2019167879 A

**Non-patent literature cited in the description**

- *Journal of the Marine Engineering Society in Japan,* September 1993, vol. 28 (9), 548-556
- **C. P. GAZZARA ; D. R. MESSIER.** *Ceram. Bull.,* 1977, vol. 56, 777-780